# EUROPEAN PATENT APPLICATION

(11) **EP 2 257 043 A1**
(43) Date of publication of application: **01.12.2010**
(21) Application number: 10163852.6
(22) Date of filing: 26.05.2010
(51) Int. Cl.: H04N 5/21, H04B 1/12, H04N 5/64

(54) **Portable television reception device**

(30) Priority: 28.05.2009 JP 2009128463; 08.12.2009 JP 2009278124
(71) Applicant: Panasonic Corporation, Kadoma-shi Osaka 571-8501 (JP)
(72) Inventor: Hibino, Yasuhiro, Osaka-shi Osaka 540-6207 (JP); Itou, Hideyuki, Osaka-shi Osaka 540-6207 (JP); Shibata, Junichi, Osaka-shi Osaka 540-6207 (JP); Kitamura, Hirokazu, Osaka-shi Osaka 540-6207 (JP)
(74) Representative: Grünecker, Kinkeldey, Stockmair & Schwanhäusser Anwaltssozietät

(57) **Abstract**

Deterioration of television reception sensitivity is prevented by using a noise signal generated from a noise signal source in a portable device. A first case includes a first coupling element connected to one of input parts of the noise-cancelling section in a part of a facing surface thereof. A second case includes a second coupling element supplied with a noise signal from the noise signal source in a part of a facing surface thereof. When the television signal is received with the noise signal source brought in a vicinity of the television receiving antenna, the first and second coupling elements are brought in a vicinity of each other and coupled at a high frequency so as to form a noise signal transmission section. The noise-cancelling section noise-cancels the first noise signal by a second noise signal transmitted to the noise-cancelling section via the noise signal transmission section.

## Description

### BACKGROUND OF THE INVENTION

### 1. Field of the Invention

) The present invention relates to a portable device including a high-frequency receiving unit capable of television reception.

### 2. Background Art

) Recent portable devices have become smaller and thinner with increasing miniaturization of components and higher integration of semiconductor elements. The small and thin portable device includes a liquid crystal display section, a portable telephone, a high-frequency receiving unit for television reception, a GPS receiving unit, a camera, and the like.

) Note here that an example of conventional art information related to the invention of this application includes Japanese Patent Application Unexamined Publication No. 2008-66824.

) When portable devices are becoming smaller and thinner, a liquid crystal display section or a driver section for controlling the liquid crystal display section and a television receiving antenna may be disposed in close vicinity of each other.

) In this case, a control signal output from the driver section and its harmonic signal may enter into the television receiving antenna as noise signals, thus deteriorating the reception sensitivity in television reception.

### SUMMARY OF THE INVENTION

) An object of the present invention is to improve reception sensitivity with respect to a control signal output from a driver section and its harmonic signal in television reception.

) A portable device of the present invention is capable of receiving a television signal and includes a first case and a second case that respectively have facing surfaces facing each other. The portable device includes a noise signal source for generating a noise signal, which is provided in the second case; a television receiving antenna for receiving a television signal, which is provided in the first case; a noise-cancelling section in which a television signal from the television receiving antenna and a first noise signal that is a noise signal input via the television receiving antenna are supplied to a first input part and which noise-cancels the first noise signal, the noise-cancelling section being provided in the first case; a first coupling element connected to a second input part of the noise-cancelling section, which is provided in a part of the facing surface of the first case; and a second coupling element to which the noise signal is supplied from the noise signal source, which is provided in a part of the facing surface of the second case. When the television signal is received in a state in which the noise signal source is disposed in a vicinity of the television receiving antenna, the first coupling element and the second coupling element are disposed in a vicinity of each other and coupled at a high frequency so as to form a noise signal transmission section. To the second input part of the noise-cancelling section, a second noise signal that is a noise signal transmitted via the noise signal transmission section is input. Then, the noise-cancelling section noise-cancels the first noise signal by using the second noise signal.

) Thus, even when the noise signal radiated from the noise signal source in the first case enters into the television receiving antenna, the noise signal can be noise-cancelled by using a noise-cancelling signal from the noise signal transmission section. Therefore, it is possible to improve the reception sensitivity in a weak electric field area in television reception.

### BRIEF DESCRIPTION OF THE DRAWINGS

Fig.1 is a block diagram showing a portable device in accordance with a first embodiment of the present invention.
Fig. 2A is a perspective view showing a portable device seen from an upper part in a state in which first and second cases are open in accordance with the first embodiment of the present invention.
Fig. 2B is a sectional view showing a portable device seen from a side part in a state in which first and second cases are open in accordance with the first embodiment of the present invention.
Fig. 2C is a sectional view showing a portable device seen from a side in a state in which first and second cases are closed in accordance with the first embodiment of the present invention.

### DETAILED DESCRIPTION OF THE INVENTION

### (FIRST EMBODIMENT)

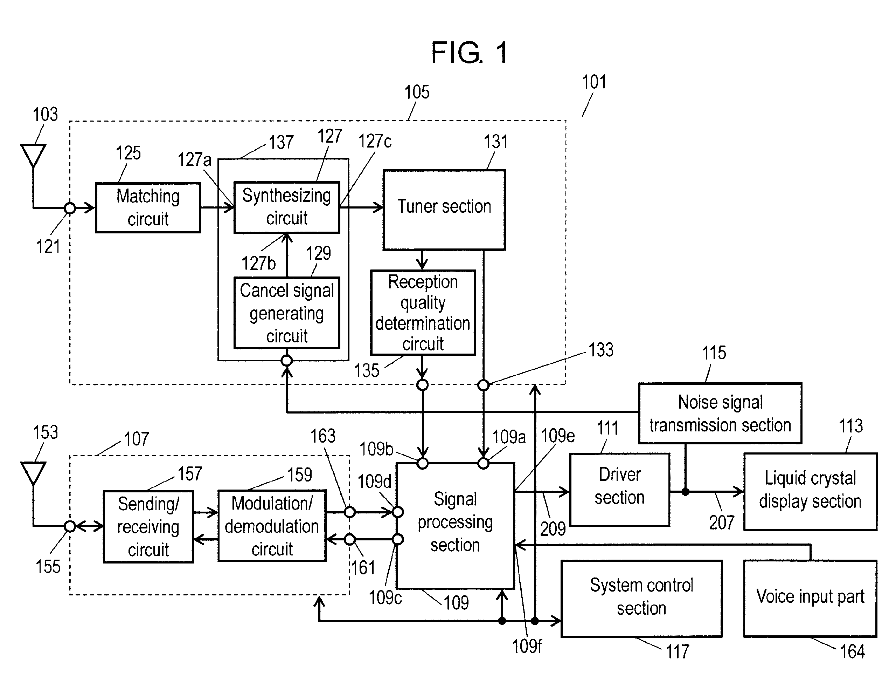

) Hereinafter, a first embodiment of the present invention is described with reference to Fig. 1. Fig.1 is a block diagram showing portable device 101. The embodiment of the present invention describes an example of portable device 101 capable of receiving a television signal in the UHF band.

) Portable device 101 includes at least high-frequency receiving unit 105, sending/receiving unit 107, signal processing section 109, driver section 111, liquid crystal display section 113, and system control section 117. High-frequency receiving unit 105 receives a television signal from television receiving antenna 103. Sending/receiving unit 107 sends and receives data and information. Signal processing section 109 carries out signal processing of output signals from high-frequency receiving unit 105 and sending/receiving unit 107. Driver section 111 receives an input of a control signal from signal processing section 109 and outputs the control signal to liquid crystal display section 113. Liquid crystal display section 113 displays an image based on the control signal input from driver section 111. System control section 117 controls at least high-frequency receiving unit 105, sending/receiving unit 107 and signal processing section 109.

) A configuration of high-frequency receiving unit 105 is described. High-frequency receiving unit 105 includes input terminal 121, matching circuit 125, synthesizing circuit 127, cancel signal generating circuit 129, tuner section 131, output terminal 133, and reception quality determination circuit 135. Input terminal 121 is supplied with a television signal from television receiving antenna 103. Matching circuit 125 includes a matching device for matching the input impedance of television receiving antenna 103 and a high frequency amplifier for amplifying signals. Synthesizing circuit 127 includes first input part 127a and second input part 127b. To input part 127a, an output signal is supplied (input) from matching circuit 125. Cancel signal generating circuit 129 generates a noise-cancelling signal for noise-cancelling a noise signal input into input part 127a. The noise-cancelling signal is input into input part 127b of synthesizing circuit 127. Synthesizing circuit 127 outputs a signal synthesized based on the input signals from input part 127a and input part 127b to tuner section 131 from output part 127c. Tuner section 131 carries out channel selection and digital demodulation of the input signal. Output terminal 133 outputs a transport stream signal output from tuner section 131. Reception quality determination circuit 135 receives an input of a reception quality signal output from tuner section 131, and determines a reception quality based on the reception quality signal.

) Output terminal 133 of tuner section 131 is input into input terminal 109a of signal processing section 109. The output of reception quality determination circuit 135 is input into input terminal 109b of signal processing section 109.

) The control signal output from output part 109e of signal processing section 109 is input into liquid crystal display section 113 via driver section 111.

) Furthermore, a portion of noise signals, a typically control signal output from driver section 111, is connected to an input part of noise signal transmission section 115.

) When, for example, a control signal output from driver section 111 enters into television receiving antenna 103 as a noise signal, thus deteriorating the reception sensitivity of a television signal, noise signal transmission section 115 can extract a portion of the control signals as the noise signal and transmit it to cancel signal generating circuit 129.

) Note here that cancel signal generating circuit 129 and synthesizing circuit 127 constitute noise-cancelling section 137.

) Next, sending/receiving unit 107 includes sending/receiving antenna 153, sending/receiving circuit 157, modulation/demodulation circuit 159, input terminal 161, and output terminal 163. Sending/receiving antenna 153 sends and receives send/receive signals for a portable telephone and the like. Sending/receiving circuit 157 is connected to sending/receiving antenna 153 via input terminal 155, and carries out signal processing of the send/receive signals for a portable telephone. Modulation/demodulation circuit 159 is connected to an output part of sending/receiving circuit 157 and carries out processing of modulation and demodulation signals. To modulation/demodulation circuit 159, input terminal 161 and output terminal 163 are connected.

) Input terminal 161 and output terminal 163 are connected to output terminal 109c and input terminal 109d of signal processing section 109, respectively. To input part 109f of signal processing section 109, voice input section 164 for receiving an input of voice signals is connected.

) An operation of portable device 101 configured as mentioned above is described with reference to Fig. 1.

) Firstly, sending/receiving unit 107 is mainly described hereinafter. A received signal from sending/receiving antenna 153 is subjected to channel selection by sending/receiving circuit 157 and converted into a lower frequency signal. The converted signal is converted into a baseband signal by modulation/demodulation circuit 159, and then input into signal processing section 109. A picture signal output from signal processing section 109 can be viewed by liquid crystal display section 113.

) Furthermore, a voice signal from voice input section 164 is converted into a digital signal by signal processing section 109 and then input into modulation/demodulation circuit 159. A modulation signal output from modulation/demodulation circuit 159 is converted into a high frequency signal by sending/receiving circuit 157 and sent from sending/receiving antenna 153.

) Next, an operation of high-frequency receiving unit 105 is described. A television signal received by television receiving antenna 103 is supplied to matching circuit 125. Matching circuit 125 can carry out impedance matching with respect to television receiving antenna 103.

) A television signal output from matching circuit 125 is input into input part 127a of synthesizing circuit 127 together with, for example, a noise signal (first noise signal) that is an unnecessary control signal from driver section 111, which enters from television receiving antenna 103 into matching circuit 125.

) In noise-cancelling section 137, an unnecessary noise signal input from input part 127a is noise-cancelled by using a noise signal (second noise signal) transmitted via noise signal transmission section 115 and output from driver section 111. That is to say, cancel signal generating circuit 129 generates a noise-cancelling signal by using a noise signal output from driver section 111 and transmitted via noise signal transmission section 115. Synthesizing circuit 127 synthesizes the unnecessary noise signal input from input part 127a via the antenna and the noise-cancelling signal, thereby carrying out noise cancelling.

) A noise-cancelled television signal is output from output part 127c of synthesizing circuit 127 and input into tuner section 131. In tuner section 131, gain control is carried out by high-frequency amplifier 131a (not shown). Then, the signal is converted into an intermediate frequency signal or a baseband signal by mixer 131b (not shown), converted into a transport stream signal, and then output from output terminal 133.

) The transport stream signal is input into signal processing section 109 from which a video signal and a voice signal are output. The video signal and voice signal are input into liquid crystal display section 113 and can be viewed and listened through liquid crystal display section 113.

) Furthermore, system control section 117 can control noise-cancelling section 137, tuner section 131, signal processing section 109, and the like.

) Furthermore, reception quality signals such as BER and C/N output from tuner section 131 are input into reception quality determination circuit 135. Based on a reception quality determination signal output from reception quality determination circuit 135, system control section 117 controls an amplitude or a phase of cancel signal generating circuit 129.

) In this way, cancel signal generating circuit 129 is controlled. Noise-cancelling section 137 carries out noise cancelling based on the determination of reception quality determined by reception quality determination circuit 135.

) By repeating the operations, the amplitude or the phase of the noise-cancelling signals output from cancel signal generating circuit 129 can be optimized.

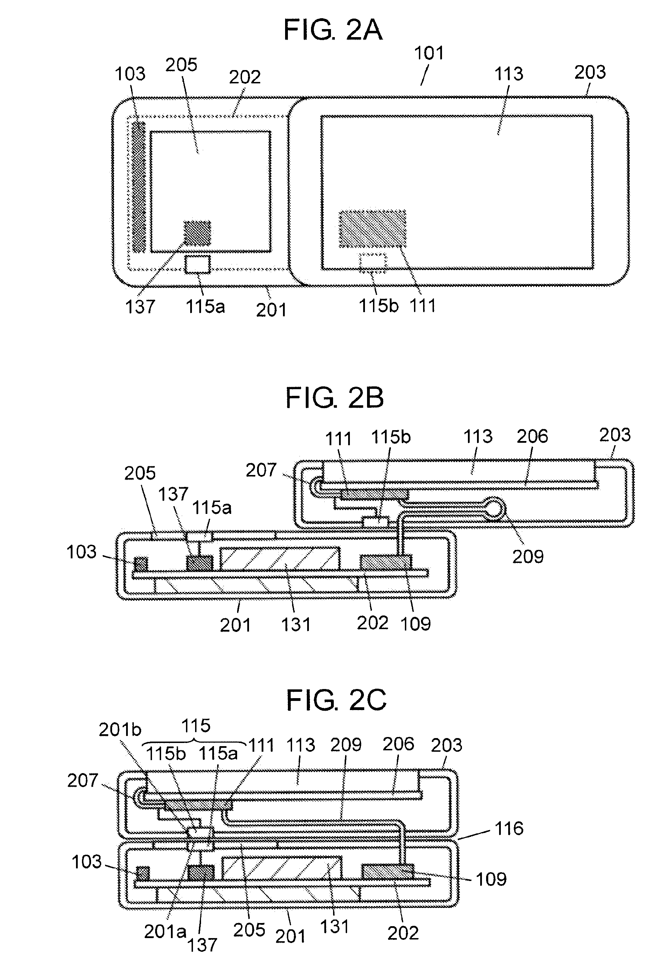

) Portable device 101 is described in detail with reference to Figs. 2A, 2B, and 2C. Fig. 2A is a perspective view showing a portable device seen from an upper part when the portable device is used.

) Fig. 2B is a sectional view showing a portable device seen from a side when the portable device is used. Portable device 101 includes case 201 (first case) and case 203 (second case). Case 201 and case 203 respectively have facing surfaces 116a and 116b that face each other, and are slidable via facing surfaces 116a and 116b. By sliding case 201 and case 203, case 201 and case 203 can be overlaid or not-overlaid with respect to each other.

) In Figs. 2A and 2B, in order to use a portable telephone by using portable device 101, case 201 and case 203 are open by sliding case 203 with respect to case 201, so that case 201 and case 203 are in a not-overlaid state. At this time, the surface in which case 201 and case 203 are overlaid with respect to each other is small.

) Case 201 includes substrate 202, television receiving antenna 103, noise-cancelling section 137, tuner section 131, signal processing section 109, one coupling element 115a (first coupling element) constituting noise signal transmission section 115, and keyboard 205. Coupling element 115a is provided in a part of facing surface 116a.

) Case 203 includes substrate 206, driver section 111 placed on substrate 206, liquid crystal display section 113, connection section 207 for connecting liquid crystal display section 113 and driver section 111 to each other, and the other coupling element 115b (second coupling element) of noise signal transmission section 115. Coupling element 115b is provided in a part of facing surface 116b.

) Furthermore, signal processing section 109 and driver section 111 are connected by connection section 209. Furthermore, one coupling element 115a and the other coupling element 115b are apart from each other when case 201 and case 203 are open in this way. Therefore, coupling element 115a and coupling element 115b do not function as noise signal transmission section 115.

) As shown in Figs. 2A and 2B, when a portable device is opened by sliding the cases, television receiving antenna 103 is apart from driver section 111, connection section 207, or connection section 209. Consequently, a noise signal is less likely to enter into television receiving antenna 103, and therefore noise cancelling by noise-cancelling section 137 is not necessary. Thus, it is not necessary that noise signal transmission section 115 extracts a control signal as a noise signal.

) Fig. 2C is a sectional view showing a portable device seen from a side when the portable device is not used.

) In Fig. 2C, case 201 and case 203 are overlaid with respect to each other almost completely, and case 201 and case 203 are closed. In this state, driver section 111 or connection section 207 and television receiving antenna 103 are disposed in the vicinity of each other. Therefore, a control signal output from driver section 111 enters into television receiving antenna 103 as a noise signal, thus deteriorating the reception sensitivity of a television signal. Note here that connection section 207 connects driver section 111 and liquid crystal display section 113 to each other.

) Since Fig. 2C shows a state in which a portable telephone is not used, case 203 is closed with respect to case 201, and case 201 and case 203 are overlaid with respect to each other. In this case, an area of the surface in which case 201 and case 203 face each other is large.

) In this case, since case 201 and case 203 are closed, case 201 and case 203 are disposed in the vicinity of each other, so that one coupling element 115a and the other coupling element 115b face in the vicinity of each other. Thus, coupling element 115a and coupling element 115b are coupled at a high frequency.

) Thus, a control signal output from driver section 111 is transmitted as a noise signal from noise signal transmission section 115 to cancel signal generating circuit 129 of noise-cancelling section 137. Furthermore, cancel signal generating circuit 129 generates a noise-cancelling signal from the noise signal and outputs noise-cancelling signal to synthesizing circuit 127. Synthesizing circuit 127 noise-cancels the control signal as a noise signal entering from television receiving antenna 103 by using the noise-cancelling signal outputted from cancel signal generating circuit 129.

) Next, coupling elements 115a and 115b constituting noise signal transmission section 115 are described hereinafter.

) Coupling elements 115a and 115b are first and second plate electrodes, respectively. The first and second plate electrodes are brought in the vicinity of each other so as to form a capacitor element. Furthermore, coupling elements 115a and 115b are first and second pattern conductors, respectively. The first and second pattern conductors are brought in the vicinity of each other so as to form an inductive coupling element.

) Furthermore, coupling elements 115a and 115b are first and second chip inductors, respectively. The first and second chip inductors are brought in the vicinity of each other so as to form an inductive coupling element.

) Note here that a noise signal is supplied by connecting coupling element 115b to connection section 207. However, for example, it may be supplied by providing an antenna for extraction (not shown) in the vicinity of driver section 111.

) Furthermore, at least one of coupling elements 115a and 115b may be surrounded by a metal case, a copper foil pattern, plating, and the like, that are provided in parallel to facing surface 116. Thus, since coupling elements 115a and 115b can be shielded at a high frequency, unnecessary noise signals can be prevented from entering into television receiving antenna 103.

) As mentioned above, case 203 includes coupling element 115b which includes facing part 201b disposed in a part of facing surface 116b and to which a noise signal is supplied from a noise signal source. Case 201 includes coupling element 115a having facing part 201a disposed in a part of facing surface 116a and coupling element 115a connected to one of the input parts of noise cancelling unit 137. When a television signal is received in a state in which the noise signal source is disposed in a vicinity of television receiving antenna 103, coupling elements 115a and 115b are disposed in a vicinity of each other and coupled at a high frequency, thereby forming noise signal transmission section 115 for transmitting a noise signal. Noise-cancelling section 137 can noise-cancel a noise signal, which enters into television receiving antenna 103, by using a noise-cancelling signal from noise signal transmission section 115. Thus, i t is possible to improve the reception sensitivity i n a weak electric field area in television reception.

) Note here that the noise signal may be a noise signal of system control section 117, a clock signal of signal processing section 109, or a harmonic signal of an oscillation signal.

) Furthermore, this embodiment describes portable device 101 composed of case 201 and case 203 having facing surfaces 116 that are movable with respect to each other in the longitudinal direction. However, for example, case 201 and case 203 may be openable and closable via a hinge part at one end side of the cases, and noise signal transmission section 115 may be formed on facing surfaces 116 of case 201 and case 203.

) Furthermore, this embodiment describes portable device 101 formed of case 201 and case 203 having facing surfaces 116 that are movable with respect to each other. However, for example, case 201 and case 203 may be detachable, and noise signal transmission section 115 may be formed on facing surfaces 116 of case 201 and case 203.

) For example, case 203 may include at least television receiving antenna 103 and tuner section 131, and case 201 may include at least sending/receiving antenna 153 and sending/receiving circuit 157. A send signal output from sending/receiving antenna 153 of case 201 may be used as a noise signal source.

) As mentioned above, the present invention can be used in portable telephones capable of receiving a television signal, portable game machines, portable computers, portable dictionaries, and the like.

### REFERENCE MARKS IN THE DRAWINGS

- 101: portable device
- 103: television receiving antenna
- 105: high-frequency receiving unit
- 107: sending/receiving unit
- 109: signal processing section
- 109a, 109b, 109d: input terminal
- 109c: output terminal
- 109e: output part
- 109f: input part
- 111: driver section
- 113: liquid crystal display section
- 115: noise signal transmission section
- 115a, 115b: coupling element
- 116a, 116b: facing surface
- 117: system control section
- 121: input terminal
- 125: matching circuit
- 127: synthesizing circuit
- 127a, 127b: input part
- 127c: output part
- 129: cancel signal generating circuit
- 131: tuner section
- 131a: high-frequency amplifier
- 131b: mixer
- 133: output terminal
- 135: reception quality determination circuit
- 137: noise-cancelling section
- 153: sending/receiving antenna
- 155: input terminal
- 157: sending/receiving circuit
- 159: modulation/demodulation circuit
- 161: input terminal
- 163: output terminal
- 164: voice input part
- 201: case
- 201a, 201b: facing part
- 202: substrate
- 203: case
- 205: keyboard
- 206: substrate
- 207: connection section
- 209: connection section

## Claims

1. A portable device capable of receiving a television signal and including a first case and a second case that respectively have facing surfaces facing each other, the portable device comprising:
a noise signal source for generating a noise signal, which is provided in the second case;
a television receiving antenna for receiving a television signal, which is provided in the first case;
a noise-cancelling section in which a television signal from the television receiving antenna and a first noise signal that is a noise signal input via the television receiving antenna are supplied to a first input part and which noise-cancels the first noise signal, the noise-cancelling section being provided in the first case;
a first coupling element connected to a second input part of the noise-cancelling section, which is provided in a part of the facing surface of the first case; and
a second coupling element to which the noise signal is supplied from the noise signal source, which is provided in a part of the facing surface of the second case;
wherein when the television signal is received in a state in which the noise signal source is disposed in a vicinity of the television receiving antenna, the first coupling element and the second coupling element are disposed in a vicinity of each other and coupled at a high frequency so as to form a noise signal transmission section, and
the noise-cancelling section noise-cancels the first noise signal by using a second noise signal transmitted to the noise-cancelling section via the noise signal transmission section.

2. The portable device of claim 1,
wherein the noise-cancelling section includes a noise-cancelling signal generating circuit and a synthesizing circuit,
the noise-cancelling signal generating circuit generates a noise-cancelling signal by using the second noise signal, and
the synthesizing circuit noise-cancels the first noise signal by using the noise-cancelling signal.

3. The portable device of claim 1,
wherein the first case and the second case are movable with respect to each other.

4. The portable device of claim 1,
wherein the first case and the second case are openable and closable via a hinge part at one end of the cases.

5. The portable device of claim 1,
wherein the first case and the second case are detachable with respect to each other.

6. The portable device of claim 1,
wherein the first case comprises a liquid crystal display section capable of displaying an image, and a driver section for controlling the liquid crystal display section based on a control signal, and the driver section is a noise signal source.

7. The portable device of claim 1,
wherein the first and second coupling elements are first and second plate electrodes, respectively, and the first and second plate electrodes are brought in a vicinity of each other so as to form a capacitor element.

8. The portable device of claim 1,
wherein the first and second coupling elements are first and second pattern conductors, respectively, and the first and second pattern conductors are brought in a vicinity of each other so as to form an inductive coupling element.

9. The portable device of claim 1,
wherein the first and second coupling elements are first and second chip inductors, respectively, and the first and second chip inductors are brought in a vicinity of each other so as to form an inductive coupling element.

10. The portable device of claim 1,
wherein at least one of the first and second coupling elements is surrounded by a metal case, a copper foil pattern, and plating in parallel to the facing surface.

11. The portable device of claim 1,
comprising a tuner section to which an output signal from the noise-cancelling section is supplied and which carries out channel selection and digital demodulation of an input signal; and a reception quality determination circuit to which a reception quality signal output from the tuner section is input and which determines a reception quality,
wherein noise-cancelling is carried out based on a determined signal from the reception quality determination circuit.
